# EUROPÄISCHE PATENTANMELDUNG

(11) **EP 1 424 014 A1**
(43) Veröffentlichungstag der Anmeldung: **02.06.2004**
(21) Anmeldenummer: 02026284.6
(22) Anmeldetag: 27.11.2002
(51) Int. Cl.: A23L 3/02

(54) **Verfahren und Vorrichtung zum Duschen von Lebensmitteln**

(71) Anmelder: Greiner Maschinenbau GmbH, 72666 Neckartailfingen (DE)
(72) Erfinder: Greiner, Wolfgang, 72666 Neckartailfingen (DE)
(74) Vertreter: Ruckh, Rainer Gerhard, Dr.

(57) **Zusammenfassung**

Die Erfmdung betrifft eine Vorrichtung und ein Verfahren zum Duschen von Lebensmitteln. Die Vorrichtung weist ein Düsensystem zur Erzeugung eines Flüssigkeitsnebels auf. Das Düsensystem weist wenigstens eine Düse (3) zur Erzeugung eines auf die Lebensmittel gerichteten Flüssigkeitsnebelstrahls (5) auf, so dass die Oberflächen der Lebensmittel mit dem Flüssigkeitsnebel benetzt sind. Durch Verdampfen des Flüssigkeitsnebels werden die Lebensmittel von einer Eingangstemperatur auf eine unterhalb der Eingangstemperatur liegende Ausgangstemperatur abgekühlt.

## Beschreibung

Die Erfindung betrifft ein Verfahren und eine Vorrichtung zum Duschen von Lebensmitteln.

Die zu duschenden Lebensmittel können von Fleischwaren und dergleichen gebildet sein, die in Umverpackungen wie zum Beispiel Folien, Naturdärmen oder Kunstdärmen abgepackt sind. Insbesondere können die Lebensmittel von Würsten gebildet sein. Anlagen zur Herstellung von Würsten weisen Füllmaschinen auf, in welchen die Würste in Endlosdärme abgefüllt werden, wobei die Würste über Abdrehstellen verbunden sind. In einer Vereinzelungsvorrichtung werden dann die Würste an den Abdrehstellen verschweißt und vereinzelt. Die so vereinzelten Würste werden dann in einer Pasteurisieranlage bei einer vorgegebenen Pasteurisiertemperatur pasteurisiert.

Schließlich werden die pasteurisierten Würste einer Vorrichtung zum Duschen der Würste zugeführt, wobei die Würste durch das Duschen abgekühlt werden.

In derartigen Vorrichtungen werden die Würste Wasserstrahlen ausgesetzt, wobei die Wasserstrahlen die Würste möglichst vollständig umspülen. Zur Erzeugung der Wasserstrahlen sind üblicherweise Duschköpfe oder dergleichen vorgesehen, die oberhalb der Würste abgeordnet sind.

Nachteilig hierbei ist, dass zum Duschen der Würste große Mengen an Duschwasser benötigt werden, so dass die laufenden Kosten für den Betrieb derartiger Vorrichtungen unerwünscht hoch sind.

Um den Verbrauch an Duschwasser gering zu halten, ist versucht worden, das Duschwasser in einem geschlossenen Kreislauf zu führen, so dass dieses mehrfach zum Duschen der Würste verwendet werden kann. Hierzu weist die Vorrichtung eine Rückgewinnungsanlage für das Duschwasser auf. Diese besteht typischerweise aus Auffangbecken, in welchen das Duschwasser nach dem Duschen gesammelt wird. Aus den Auffangbecken wird das Duschwasser wieder einem Vorratsbehälter oder dergleichen zugeführt, aus welchem die Duschköpfe mit Duschwasser gespeist werden.

Nachteilig hierbei ist, dass derartige Rückführungsanlagen einen erheblichen Konstruktions- und Kostenaufwand bedeuten, welche die Herstellungskosten derartiger Vorrichtungen erheblich verteuern. Insbesondere die Auffangbecken zum Sammeln des verbrauchten Duschwassers sind konstruktiv aufwendig. Zudem ist der Platzbedarf für derartige Auffangbecken unerwünscht hoch. Weiterhin muss das verbrauchte Duschwasser dem Vorratsbehälter und den Duschköpfen wieder zugeführt werden, wofür aufwendige Pumpensysteme benötigt werden. Schließlich muss das verbrauchte Duschwasser wieder abgekühlt werden, da dieses durch den Kontakt mit den Würsten aufgeheizt wird.

Der Erfindung liegt die Aufgabe zugrunde ein Verfahren und eine Vorrichtung der eingangs genannten Art so auszubilden, dass ein effizientes und kostengünstiges Duschen von Lebensmitteln ermöglicht wird.

Zur Lösung dieser Aufgabe sind die Merkmale der Ansprüche 1 und 16 vorgesehen. Vorteilhafte Ausführungsformen und zweckmäßige Weiterbildungen der Erfindung sind in den Unteransprüchen beschrieben.

Die erfindungsgemäße Vorrichtung zum Duschen von Lebensmitteln weist ein Düsensystem zur Erzeugung von Flüssigkeitsnebel auf. Das Düsensystem weist wenigstens eine Düse zur Erzeugung eines auf die Lebensmittel gerichteten Flüssigkeitsnebelstrahls auf, so dass die Oberflächen der Lebensmittel mit dem Flüssigkeitsnebel benetzt sind. Durch Verdampfen des Flüssigkeitsnebels werden die Lebensmittel von einer Eingangstemperatur auf eine unterhalb der Eingangstemperatur liegende Ausgangstemperatur abgekühlt.

Die erfindungsgemäße Vorrichtung eignet sich zum Duschen von Lebensmittels aller Art, die in Umverpackungen wie zum Beispiel Folien, Naturdärmen oder Kunstdärmen abgepackt sind. Insbesondere eignet sich die erfindungsgemäße Vorrichtung zum Duschen von Würsten.

Der Grundgedanke der Erfindung besteht dabei darin, zur Abkühlung anstelle von Wasserstrahlen Flüssigkeitsnebel einzusetzen. Der die Lebensmittel, insbesondere die Würste umgebende feine Flüssigkeitsnebel verdunstet sofort an der Oberfläche der Lebensmittel. Durch die dabei frei werdende Verdunstungskälte werden die Lebensmittel effizient und gleichmäßig abgekühlt.

Zur Erzielung des gewünschten Abkühleffekts wird als Flüssigkeit zur Generierung des Flüssigkeitsnebels vorzugsweise Wasser, insbesondere Leitungswasser verwendet.

Ein weiterer wesentlicher Vorteil der Erfindung besteht darin, dass durch die Verwendung von Wassernebel nur ein äußerst geringer Bedarf an Duschwasser anfällt. Die erfindungsgemäße Vorrichtung arbeitet somit ohne aufwendige Rückgewinnungsanlagen für das Duschwasser äußerst energie- und kostensparend.

Zur Erzeugung eines möglichst feinen Wassernebels ist ein Düsensystem mit Düsen vorgesehen, welchen zugleich Duschwasser und Druckluft zugeführt wird. Damit tritt an einer ersten Düsenaustrittsöffnung einer Düse ein beschleunigter Wassernebelstrahl aus, der auf die Lebensmittel gerichtet wird. Um die Tröpfchen im Wassernebelstrahl weiter zu zerkleinern, sind an den Düsen zweite Düsenaustrittsöffnungen vorgesehen, über welche Druckluft in den Wassernebelstrahl eingeleitet wird, wodurch die Tröpfchen im Wassemebelstrahl zerplatzen.

In einer vorteilhaften Ausführungsform der Erfindung erfolgt das Duschen der Lebensmittel in einer Kühlzone, die wenigstens abschnittsweise durch Kühlplatten begrenzt ist. Die Kühlzone ist dabei so bemessen, dass sich der Flüssigkeitsnebel vollständig über die Kühlzone erstreckt. Dadurch ist gewährleistet, dass die von den Kühlplatten generierte Kälte über den Flüssigkeitsnebel auf die Lebensmittel übertragen wird.

Damit können die Lebensmittel auch mit äußerst geringen Wassermengen von einer Eingangstemperatur auf eine zu erzielende Ausgangstemperatur abgekühlt werden. Bei einem Duschen von Würsten liegt die Eingangstemperatur der Würste typischerweise im Bereich von 75°C bis 80°C und die Ausgangstemperatur im Bereich von 20°C bis 25°C.

Die Kühlplatten sowie die Düsen begrenzen die Kühlzone vorzugsweise seitlich. Besonders vorteilhaft sind die Düsen des Düsensystems in den Kühlplatten integriert. Zusätzlich oder alternativ zu den Kühlplatten kann oberhalb der Kühlzone wenigstens ein Ventilator vorgesehen sein, welcher zur Wärmeabfuhr aus der Kühlzone dient.

In einer vorteilhaften Ausführungsform der Erfindung werden die Lebensmittel mit einem Flüssigkeitsnebel geduscht, welcher Desinfektionsmittel enthält. Vorzugsweise wird als Flüssigkeit zum Duschen der Lebensmittel Duschwasser verwendet, welchem Desinfektionsmittel beigemischt werden. Ein wesentlicher Vorteil hierbei besteht darin, dass durch die Beaufschlagung der Lebensmittel mit Desinfektionsmittel in Form eines feinen, dichten Nebels nicht nur eine vollständige Benetzung der Oberfläche der Lebensmittel erzielt wird. Vielmehr wird auch eine gute Tiefenwirkung des Desinfektionsmittels erhalten, da der dichte Nebel in das Innere der Lebensmittel gut eindringt.

Die Erfindung wird im nachstehenden anhand der Zeichnungen erläutert. Es zeigen:
- Figur 1:: Schematische Darstellung eines ersten Ausführungsbeispiels einer Vorrichtung zum Duschen Würsten mit einem Düsensystem.
- Figur 2:: Aufbau einer Düse des Düsensystems gemäß Figur 1.
- Figur 3:: Draufsicht auf ein zweites Ausführungsbeispiel der Vorrichtung zum Duschen von Würsten.
- Figur 4:: Draufsicht auf eine Kühlplatte für die Vorrichtung gemäß Figur 3.

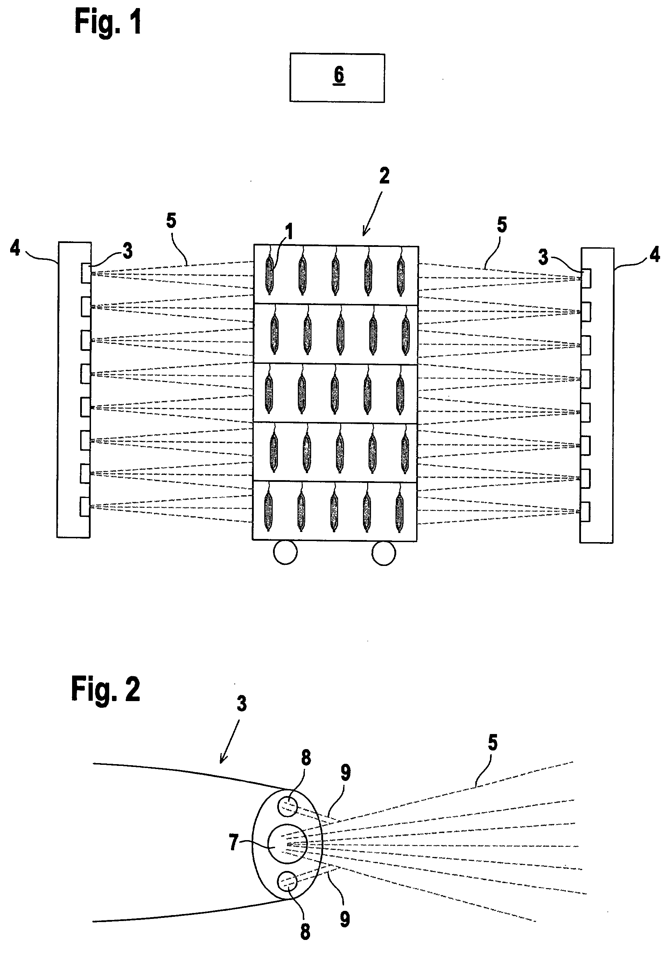

Figur 1 zeigt ein erstes Ausführungsbeispiel einer Vorrichtung zum Duschen von Lebensmitteln, die im vorliegenden Fall von Würsten 1 gebildet sind. Die Vorrichtung ist Bestandteil einer nicht dargestellten Anlage zur Herstellung von Würsten 1. Die Anlage umfasst eine Füllmaschine, in welcher die Würste 1 in Endlosdärme abgefüllt und an ihren Enden abgedreht werden. Zudem umfasst die Anlage eine Vereinzelungseinrichtung zum Verschweißen und Vereinzeln der Würste 1. Schließlich werden die Würste 1 in einer Pasteurisierungsanlage pasteurisiert.

Die pasteurisierten Würste 1 werden der Vorrichtung zum Duschen von Würsten 1 zugeführt, welche vorzugsweise in einem nicht dargestellten geschlossenen Raum angeordnet ist. Dabei werden die Würste 1 typischerweise mit einer Eingangstemperatur, die im Bereich zwischen 75°C und 80°C liegt, der Vorrichtung zugeführt. Durch das Duschen der Würste 1 werden diese auf eine Ausgangstemperatur abgekühlt, die im Bereich von 20°C bis 25°C liegt.

Prinzipiell können die Würste 1 kontinuierlich durch die Vorrichtung gefördert werden. Im vorliegenden Fall werden die Würste 1 auf Wagen 2 gelagert, die zur Durchführung des Duschvorgangs stationär in dem jeweiligen Raum angeordnet sind.

Die in Figur 1 dargestellte Vorrichtung zum Duschen von Würsten 1 weist ein Düsensystem mit einer Vielzahl von Düsen 3 auf. Die Düsen 3 sind an zwei rahmenförmigen Halterungen 4 montiert, die in Abstand gegenüberliegend angeordnet sind. Jede Halterung 4 umschließt eine rechteckförmige Fläche, über welche die Düsen 3 gleichmäßig verteilt sind. Die so ausgebildeten Halterungen 4 begrenzen eine Kühlzone, in welcher der Wagen 2 mit den Würsten 1 angeordnet ist. Die Bauhöhen der Halterungen 4 sind an die Höhen der Wagen 2 angepasst. Prinzipiell kann die Kühlzone so dimensioniert sein, dass mehrere Wagen 2 in der Kühlzone platziert werden können. Alternativ oder zusätzlich können auch Mehrfachanordnungen von Kühlzonen vorgesehen sein.

Mittels der Düsen 3 wird ein Wassernebel erzeugt, welcher vorzugsweise die gesamte Kühlzone ausfüllt. Die einzelnen Düsen 3 generieren dabei Wassemebelstrahlen 5, die auf die Würste 1 gerichtet sind. Dabei benetzt der Wassemebel die Oberflächen der Würste 1. Durch das Verdunsten des Wassernebels wird den Würsten 1 Wärme entzogen, so dass diese von der Eingangstemperatur auf die Ausgangstemperatur abgekühlt werden.

Zur Abführung von Wärme aus der Kühlzone ist oberhalb des Wagens 2 wenigstens ein Ventilator 6 vorgesehen. Dadurch wird die Abkühlung der Würste 1 unterstützt.

Die Düsen 3 des Düsensystems sind identisch ausgebildet. Der Aufbau einer derartigen Düse 3 ist in Figur 2 schematisch dargestellt. Die Düse 3 weist eine erste Düsenaustrittsöffnung 7 auf, über welche der Wassernebelstrahl 5 austritt. Zur Generierung des Wassernebels weisen die Düsen 3 des Düsensystems jeweils einen nicht dargestellten Wasseranschluss und einen Druckluftanschluss auf. Über den Druckluftanschluss wird den Düsen 3 Druckluft mit einem Druck von 5 bar bis 7 bar, vorzugsweise 6 bar, zugeführt. Gleichzeitig wird den Düsen 3 über den Wasseranschluss Duschwasser zugeführt. Hierfür wird vorzugsweise Leitungswasser verwendet, dessen Temperatur typischerweise im Bereich zwischen 12°C und 20°C liegt. In der Düse 3 wird das Duschwasser mit der Druckluft vermischt. Durch den hohen Druck der Druckluft wird die Luft mit dem Wasser zu einem feinen Nebel vermischt und als Wassemebelstrahl 5 aus der ersten Düsenaustrittsöffnung 7 ausgeleitet. Vorzugsweise ist der Wassernebelstrahl 5 aufgefächert, so dass dieser ein möglichst großes Volumenelement ausfüllt. Dabei ist jedoch die Größe der Düsenaustrittsöffnung 7 so klein gewählt, dass der Wassernebelstrahl 5 mit hoher Beschleunigung aus der Düse 3 austritt. Bevorzugt liegt der Durchmesser der ersten Düsenaustrittsöffnung 7 im Bereich von 0,3 mm bis 2 mm.

Zusätzlich zu der ersten Düsenaustrittsöffnung 7 weist jede Düse 3 zwei weitere zweite Düsenaustrittsöffnungen 8 auf. Jeweils eine zweite Düsenaustrittsöffnung 8 liegt oberhalb beziehungsweise unterhalb der ersten Düsenaustrittsöffnung 7. Die Durchmesser der zweiten Düsenaustrittsöffnungen 8 sind identisch ausgebildet und zudem erheblich kleiner als der Durchmesser der ersten Düsenaustrittsöffnung 7. Typischerweise betragen die Durchmesser der zweiten Düsenaustrittsöffnungen 8 etwa 20% bis 60% des Durchmessers der ersten Düsenaustrittsöffnung 7.

Über einen weiteren nicht dargestellten Druckluftanschluss wird Druckluft in der Düse 3 geführt und über die beiden zweiten Düsenaustrittsöffnungen 8 ausgeführt. Die so erzeugten Druckluftstrahlen 9 sind im Bereich der ersten Düsenaustrittsöffnungen 7 auf den dort ausgeleiteten Wassernebelstrahl 5 gerichtet. Durch die Druckluftstrahlen 9 wird bewirkt, dass die Tröpfchen im Wassemebelstrahl 5 zu feinsten Wassertröpfchen zerplatzen. Dadurch wird mit der Düse 3 ein besonders feiner Wassernebel erhalten.

Figur 2 zeigt ein zweites Ausführungsbeispiel der erfindungsgemäßen Vorrichtung zum Duschen von Würsten 1. In diesem Fall ist die Kühlzone, in welcher wenigstens ein Wagen 2 mit Würsten 1 platziert wird, von zwei Kühlplatten 10 begrenzt. Die Kühlplatten 10 weisen eine rechteckige Kontur auf. Die Oberflächen der Kühlplatten 10 verlaufen in vertikalen Ebenen und begrenzen die Kühlzone seitlich.

Die Kühlplatten 10 sind identisch ausgebildet und weisen jeweils eine Bauhöhe auf, die an die Höhe der Wagen 2 angepasst ist. Die Düsen 3 des Düsensystems sind in die einzelnen Kühlplatten 10 integriert.

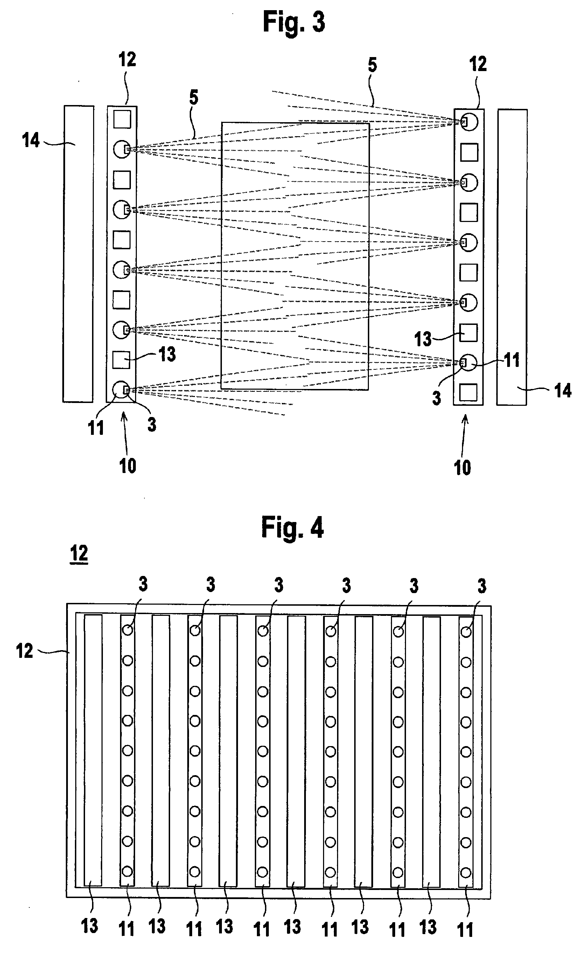

Die Düsen 3 sind jeweils in einer Linearanordnung in rohrförmigen Trägern 11 integriert (Figur 4). Die Träger 11 sind in Abstand zueinander an der jeweiligen Kühlplatte 10 montiert. Diese weist hierzu einen rechteckigen Rahmen 12 auf, an welchen die Träger 11 befestigt sind. Der den Rand der Kühlplatte 10 begrenzende Rahmen 12 besteht vorzugsweise aus Stahl. Die Längsachsen der identisch ausgebildeten Träger 11 verlaufen in vertikaler Richtung und erstrecken sich über nahezu die gesamte Höhe der Kühlplatte 10. Die Düsen 3 eines Trägers 11 sind äquidistant zueinander in Längsrichtung des Trägers 11 hintereinander angeordnet. Durch die Mehrfachanordnung der Träger 11 sind die Düsen 3 flächendeckend über die Oberfläche der Kühlplatte 10 verteilt. Dabei sind die Düsen 3 identisch zu den Düsen 3 gemäß dem Ausführungsbeispiel gemäß den Figuren 1 und 2 ausgebildet. Die nicht dargestellten Wasseranschlüsse und Druckluftanschlüsse der Düsen 3 sind in den Trägern 11 integriert.

Jeweils zwischen zwei benachbarten Trägern 11 einer Kühlplatte 10 verlaufen Rohre 13, die mit Kühlmittel befüllt sind. Als Kühlmittel wird vorzugsweise Glykol verwendet. Die Rohre 13 sind als Vierkantrohre ausgebildet und an dem Rahmen 12 fixiert, wobei die Längsachsen der Rohre 13 in vertikaler Richtung verlaufen. Auf diese Weise ergibt sich an jeder Kühlplatte 10 eine alternierende Folge von Rohren 13 mit Kühlmitteln und Trägern 11 mit Düsen 3. Die Rohre 13 sind damit ebenfalls gleichmäßig über die Fläche einer Kühlplatte 10 verteilt. Dadurch ist eine homogene Kälteerzeugung gewährleistet.

An die Rückseite jeder Kühlplatte 10 schließt eine Isolatorplatte 14 an. Die Isolatorplatte 14 weist im Wesentlichen dieselbe Fläche wie die Kühlplatte 10 auf und besteht aus aufgeschäumtem Kunststoff oder dergleichen.

Mit den Düsen 3 des Düsensystems wird analog zu dem Ausführungsbeispiel gemäß Figur 1 ein Wassernebel erzeugt, der die Kühlzone vollständig ausfüllt. Die an den zweiten Düsenaustrittsöffnungen 8 ausgeleiteten Wassernebelstrahlen 5 sind dabei wiederum auf den Wagen 2 gerichtet, so dass die dort angeordneten Würste 1 vollständig mit Wassernebel benetzt werden. Durch die Verdunstung des Wassernebels erfolgt wiederum die Abkühlung der Würste 1.

Dieser Abkühleffekt wird durch die Kühlplatten 10 erheblich verstärkt. Durch die gleichmäßige Verteilung der Rohre 13 in den Kühlplatten 10 wird erreicht, dass die Kühlwirkung gleichmäßig über die gesamte Oberfläche der jeweiligen Kühlplatte 10 verteilt ist. Da der Raum der Kühlzone vollständig mit Wassernebel erfüllt ist, findet durch diesen Wassernebel eine effiziente Übertragung der in den Kühlplatten 10 erzeugten Kälte auf die Würste 1 in der Kühlzone statt. Dadurch wird die Abkühlung der Würste 1 erheblich beschleunigt. Durch die Isolatorplatten 14 wird ein Entweichen der in den Rohren 13 erzeugten Kälte über die Rückseiten der Kühlplatten 10 verhindert. Damit wird die Kälte in dem Bereich der Kühlzone konzentriert, wodurch die Abkühlung der Würste 1 weiter gefördert wird.

Auch bei dem Ausführungsbeispiel gemäß Figur 3 kann oberhalb der Kühlzone wenigstens ein Ventilator 6 zur Wärmeabfuhr vorgesehen sein.

Das Duschen der Würste 1 erfolgt vorzugsweise während einer vorgegebenen Duschzeit. Im einfachsten Fall werden die Würste 1 während der gesamten Duschzeit mit dem Wassernebel benetzt.

In einer besonders vorteilhaften Ausführungsform wird dem Wassernebel vorzugsweise während der Endphase der Duschzeit ein Desinfektionsmittel, vorzugsweise eine Genusssäure wie zum Beispiel Ameisensäure, Milchsäure, Essigsäure, Weinsäure oder Zitronensäure beigemischt.

Vorzugsweise beträgt diese Endphase etwa 10 - 15 % der gesamten Duschzeit. Das flüssige Desinfektionsmittel wird aus einem nicht dargestellten Vorratssystem bestehend aus einem Tank und einem Leitungssystem mit einem Ventil dosiert den Wassernebelstrahlen 5 zugeführt. Insbesondere kann das Desinfektionsmittel auch direkt über die Düsen 3 des Düsensystems eingeleitet werden.

Beim Duschen der Würste 1 mit dem Wassernebel entsteht durch die Umluft und das verwendete Wasser selbst ein hoher Verkeimungsgrad an den Oberflächen der Würste 1. Zwar wird durch die Abkühlung der Würste 1 mittels des Wassernebels bereits die Vermehrung von Bakterien gehemmt. Jedoch ist dieser Effekt oftmals nicht ausreichend, um eine zufriedenstellende Keimfreiheit zu erhalten. Durch die Beimischung der Genusssäure zu dem Wassernebel während der Endphase wird dagegen eine zufriedenstellende Keimfreiheit erzielt, wodurch die Haltbarkeit der Würste 1, insbesondere wenn es sich um vakuumverpackte Waren handelt, erheblich vergrößert wird.

### Bezugszeichenliste

- ( 1 ): Würste
- (2): Wagen
- (3): Düsen
- (4): Halterungen
- (5): Wassernebelstrahlen
- (6): Ventilator
- (7): Erste Düsenaustrittsöffnung
- (8): Zweite Düsenaustrittsöffnung
- (9): Druckluftstrahlen
- (10): Kühlplatten
- (11): Träger
- (12): Rahmen
- (13): Rohre
- (14): Isolatorplatten

## Patentansprüche

1. Verfahren zum Duschen von mit Umverpackungen umhüllten Lebensmitteln **gekennzeichnet durch** folgende Verfahrensschritte:
- Erzeugung eines Flüssigkeitsnebels, wobei wenigstens ein Flüssigkeitsnebelstrahl (5) auf die Lebensmittel zur Benetzung deren Oberflächen gerichtet wird,
- Abkühlen der Lebensmittel von einer Eingangstemperatur auf eine unterhalb der Eingangstemperatur liegende Ausgangstemperatur **durch** Verdampfen des Flüssigkeitsnebels auf den Oberflächen der Lebensmittel.

2. Verfahren nach Anspruch 1, **dadurch gekennzeichnet, dass** der Flüssigkeitsnebel von einem Wassernebel gebildet ist.

3. Verfahren nach Anspruch 2, **dadurch gekennzeichnet, dass** dem Wassernebel ein Desinfektionsmittel zur Bildung des Flüssigkeitsnebels beigefügt wird.

4. Verfahren nach Anspruch 3, **dadurch gekennzeichnet, dass** die Lebensmittel während einer vorgegebenen Duschzeit mit dem Flüssigkeitsnebel benetzt werden, wobei nur in der Endphase der Duschzeit dem Wassernebel Desinfektionsmittel beigefügt werden.

5. Verfahren nach Anspruch 4, **dadurch gekennzeichnet, dass** die Dauer der Endphase 10 % bis 15 % der gesamten Duschzeit beträgt.

6. Verfahren nach einem der Ansprüche 4 oder 5, **dadurch gekennzeichnet, dass** als Desinfektionsmittel Genusssäuren verwendet werden.

7. Verfahren nach Anspruch 6, **dadurch gekennzeichnet, dass** als Genusssäure Ameisensäure, Milchsäure, Essigsäure, Zitronensäure oder Weinsäure verwendet wird.

8. Verfahren nach einem der Ansprüche 1 - 7, **dadurch gekennzeichnet, dass** die Umverpackungen von Folien, Naturdärmen oder Kunstdärmen gebildet sind.

9. Verfahren nach Anspruch 8, **dadurch gekennzeichnet, dass** die Lebensmittel von Würsten (1) gebildet sind.

10. Verfahren zum Duschen von Lebensmitteln nach einem der Ansprüche 1-9, **dadurch gekennzeichnet, dass** die Lebensmittel in einer von Kühlplatten (10) begrenzten Kühlzone gelagert werden, wobei der Flüssigkeitsnebel in die Kühlzone eingestrahlt wird, so dass die von den Kühlplatten (10) generierte Kälte über den Flüssigkeitsnebel auf die Lebensmittel übertragen wird.

11. Verfahren zum Duschen von Lebensmitteln nach Anspruch 10, **dadurch gekennzeichnet, dass** die Kühlplatten (10) die Kühlzone seitlich begrenzen.

12. Verfahren zum Duschen von Lebensmitteln nach einem der Ansprüche 10 oder 11, **dadurch gekennzeichnet, dass** der Flüssigkeitsnebel seitlich in die Kühlzone eingestrahlt wird.

13. Verfahren zum Duschen von Lebensmitteln nach einem der Ansprüche 9 - 12, **dadurch gekennzeichnet, dass** die Eingangstemperatur der Würste (1) im Bereich zwischen 75°C und 80°C liegt.

14. Verfahren zum Duschen von Lebensmitteln nach Anspruch 13, **dadurch gekennzeichnet, dass** die Ausgangstemperatur der Würste (1) im Bereich zwischen 20°C und 25°C liegt.

15. Verfahren zum Duschen von Lebensmitteln nach einem der Ansprüche 13 oder 14, **dadurch gekennzeichnet, dass** als Duschwasser Leitungswasser bei einer Temperatur zwischen 12°C und 20°C verwendet wird.

16. Vorrichtung zur Durchführung des Verfahrens nach einem der Ansprüche 1 - 15, **gekennzeichnet durch** ein Düsensystem zur Erzeugung eines Flüssigkeitsnebels, wobei das Düsensystem wenigstens eine Düse (3) zur Erzeugung eines auf die Lebensmittel gerichteten Flüssigkeitsstrahls (5) aufweist, so dass die Oberflächen der Lebensmittel mit dem Flüssigkeitsnebelnebel benetzt sind, wobei **durch** Verdampfen des Flüssigkeitsnebels die Lebensmittel von einer Eingangstemperatur auf eine unterhalb der Eingangstemperatur liegende Ausgangstemperatur abgekühlt werden.

17. Vorrichtung nach Anspruch 16, **dadurch gekennzeichnet, dass** die Flüssigkeit von reinem Duschwasser oder Duschwasser mit einem Zusatz von Desinfektionsmitteln gebildet ist, und dass das Düsensystem Düsen (3) umfasst, welchen über einen Wasseranschluss Duschwasser und über einen Druckluftanschluss Druckluft zur Generierung von Flüssigkeitsnebelstrahlen (5) zugeführt ist.

18. Vorrichtung nach Anspruch 17, **dadurch gekennzeichnet, dass** die Druckluft mit einem Druck von 5 bar bis 7 bar den Düsen (3) zugeführt ist.

19. Vorrichtung nach einem der Ansprüche 17 oder 18, **dadurch gekennzeichnet, dass** jede Düse (3) eine erste Düsenaustrittsöffnung (7) aufweist, über welche der Flüssigkeitsnebelstrahl (5) ausgeleitet ist, und dass an jeder Düse (3) wenigstens eine zweite Düsenaustrittsöffnung (8) vorgesehen ist, über welche Druckluft in den Flüssigkeitsnebelstrahl (5) der Düse (3) eingeleitet ist, wodurch die Tröpfchen im Flüssigkeitsnebelstrahl (5) zerkleinert werden.

20. Vorrichtung nach Anspruch 19, **dadurch gekennzeichnet, dass** jede Düse (3) zwei zweite Düsenaustrittsöffhungen (8) aufweist, wobei jeweils eine der zweiten Düsenaustrittsöffnungen (8) oberhalb und unterhalb der ersten Düsenaustrittsöffnung (7) liegt.

21. Vorrichtung nach einem der Ansprüche 19 oder 20, **dadurch gekennzeichnet, dass** der Durchmesser einer ersten Düsenaustrittsöffnung (7) im Bereich zwischen 0,3 mm und 2,0 mm liegt.

22. Vorrichtung nach Anspruch 21, **dadurch gekennzeichnet, dass** der Durchmesser einer zweiten Düsenaustrittsöffnung (8) 20% bis 60% des Durchmessers der zugeordneten ersten Düsenaustrittsöffnung (7) beträgt.

23. Vorrichtung nach einem der Ansprüche 16 - 22, **dadurch gekennzeichnet, dass** die Lebensmittel in Wagen (2) stationär gelagert sind.

24. Vorrichtung nach Anspruch 23, **dadurch gekennzeichnet, dass** wenigstens ein Wagen (2) mit Lebensmittel in einer Kühlzone angeordnet ist, welche wenigstens abschnittsweise durch Kühlplatten (10) begrenzt ist.

25. Vorrichtung nach Anspruch 24, **dadurch gekennzeichnet, dass** der Flüssigkeitsnebel über die gesamte Kühlzone verteilt ist, so dass die von den Kühlplatten (10) erzeugte Kälte über den Flüssigkeitsnebel auf die Lebensmittel übertragen wird.

26. Vorrichtung nach einem der Ansprüche 24 oder 25, **dadurch gekennzeichnet, dass** wenigstens zwei Kühlplatten (10) die Kühlzone an gegenüberliegenden Seiten begrenzen.

27. Vorrichtung nach einem der Ansprüche 24 - 27, **dadurch gekennzeichnet, dass** jede Kühlplatte (10) mit einem Kältemittel befüllt ist.

28. Vorrichtung nach Anspruch 27, **dadurch gekennzeichnet, dass** das Kältemittel von Glykol gebildet ist.

29. Vorrichtung nach einem der Ansprüche 24 - 27, **dadurch gekennzeichnet, dass** die Düsen (3) des Düsensystems in den Kühlplatten (10) integriert sind.

30. Vorrichtung nach Anspruch 29, **dadurch gekennzeichnet, dass** jede Kühlplatte (10) eine alternierende Folge von in jeweils vertikaler Richtung verlaufenden Trägern (11) mit Düsen (3) und Kühlmittel enthaltenden Rohren (13) aufweist.

31. Vorrichtung nach Anspruch 30, **dadurch gekennzeichnet, dass** an die Rückseite jeder Kühlplatte (10) eine Isolatorplatte (14) anschließt.

32. Vorrichtung nach einem der Ansprüche 24 - 31, **dadurch gekennzeichnet, dass** oberhalb der Kühlzone wenigstens ein Ventilator (6) angeordnet ist.
